Europäisches Patentamt

European Patent Office

Office européen des brevets

(19)

(11) Numéro de publication: **0 074 298**
**A1**

(12)

# DEMANDE DE BREVET EUROPEEN

(21) Numéro de dépôt: **82401540.8**

(22) Date de dépôt: **16.08.82**

(51) Int. Cl.³: **F 24 F 7/08**
**F 24 J 3/02**

(30) Priorité: **07.09.81 FR 8116917**

(43) Date de publication de la demande:
**16.03.83 Bulletin 83/11**

(84) Etats contractants désignés:
**AT BE CH DE GB IT LI LU NL SE**

(71) Demandeur: **PATENTS AND RESEARCHES
ESTABLISHMENT Société de droit du Liechtenstein
dite:**

**Eschen(LI)**

(72) Inventeur: **Pedone, Antonio
13 Place Verte
Tournai(BE)**

(74) Mandataire: **Bonnetat, Christian et al,
Cabinet PROPI Conseils 23 rue de Léningrad
F-75008 Paris(FR)**

(54) **Dispositif pour renouveler l'air d'un local.**

(57) Selon l'invention, ce dispositif est caractérisé en ce qu'il
comporte une enceinte étanche 6 séparée en deux compartiments plats 7 et 8, par une feuille 9 d'une matière conductrice
de la chaleur, l'un des compartiments 7 comportant une
entrée 7a pour l'air venant du local 2 et une sortie 7b à
l'extérieur pour cet air, tandis que l'autre compartiment 8
comporte une entrée d'air frais extérieur 8a et une sortie 8b
de celui-ci à l'intérieur dudit local 2.

Renouvellement de l'air d'un local avec récupération de
la chaleur de l'air vicié sortant et compensation énergétique
photothermique des pertes dues au rendement de l'échange.

Fig.1

EP 0 074 298 A1

Dispositif pour renouveler l'air d'un local

0074298

La présente invention concerne un dispositif pour renouveler l'air d'un local.

On connaît déjà des dispositifs de climatisation de locaux comportant des moyens pour extraire l'air chaud vicié desdits locaux et le remplacer par de l'air frais venant de l'extérieur. Généralement, ces dispositifs non seulement ne récupèrent pas totalement la chaleur portée par l'air chaud vicié expulsé, mais encore comportent des moyens de chauffage de l'air frais incident.

La présente invention a pour objet de remédier à cet inconvénient et de permettre le chauffage de l'air frais incident par l'air vicié expulsé ainsi que d'ajouter des calories supplémentaires pour permettre d'au moins compenser les pertes dues à l'échangeur.

A cette fin, selon l'invention, le dispositif pour renouveler l'air d'un local est remarquable en ce qu'il comporte une enceinte étanche séparée en deux compartiments plats par une feuille d'une matière conductrice de la chaleur, l'un des compartiments comportant une entrée pour l'air venant dudit local et une sortie à l'extérieur pour cet air, tandis que l'autre compartiment comporte une entrée d'air frais extérieure et une sortie de celui-ci à l'intérieur dudit local.

Ainsi, ce dispositif agit comme un échangeur de chaleur, permettant de récupérer les calories portées par l'air expulsé.

Afin de favoriser l'échange de chaleur entre l'air sortant et l'air incident, il est avantageux que l'air venant du local et l'air frais venant de l'extérieur circulent en sens inverse de part et d'autre de ladite feuille de matière conductrice de la chaleur.

**0074298**

Par ailleurs, pour permettre d'accroître la température de l'air frais incident et compenser les pertes dues au rendement de l'échangeur, il est avantageux que le dispositif forme convertisseur photothermique et que le compartiment traversé par l'air sortant du local soit dirigé vers la lumière incidente. Ainsi, l'énergie photonique captée par le convertisseur photothermique accroît la température de ladite feuille de matière conductrice de la chaleur et donc celle du courant d'air frais incident.

Avantageusement, la feuille de matière conductrice comporte une face lisse du côté du compartiment traversé par l'air frais et une face soit ayant subi un traitement absorbant, soit pourvue d'une multitude de dendrites du côté du compartiment traversé par l'air sortant du local. Une telle feuille peut par exemple être du type décrit dans la demande de brevet français numéro 80 24504 déposée le 19 novembre 1980 par la Demanderesse. Une telle feuille est thermoconductrice dans un sens et isolante dans l'autre (effet thermos).

Afin de permettre aux deux courants d'air de lécher la totalité de la surface de la feuille, les compartiments peuvent être pourvus de chicanes pour répartir ces courants d'air et provoquer des turbulences qui améliorent l'échange thermique. De plus, la feuille de matière conductrice de la chaleur peut former des méandres, qui, associés à des chicanes, augmentent la surface d'échange entre l'air frais venant de l'extérieur et l'air chaud sortant du local.

Il est avantageux de prévoir des moyens, tels qu'un ventilateur pour forcer l'air à travers l'un au moins des compartiments du dispositif. La faible consommation électrique d'un tel ventilateur est largement compensée par la conversion photothermique.

Le dispositif selon l'invention peut avantageusement être fixé sur la face extérieure d'un mur du local. Il peut être disposé verticalement, horizontalement ou en oblique.

Dans certains cas, notamment lorsque la température ambiante extérieure est très faible, on peut prévoir de plus un dispositif semblable placé à l'intérieur du local et monté en série avec le dispositif extérieur, tant en ce qui concerne le courant d'air qui sort que le courant d'air qui entre. Ainsi, le courant d'air incident est préchauffé dans le dispositif extérieur à la fois par transfert et par conversion photothermique, puis chauffé dans le dispositif intérieur. Avec un tel dispositif, on peut obtenir à la sortie du dispositif intérieur un courant d'air incident ayant une température supérieure à l'ambiance intérieure du local et donc élever la température de cette ambiance.

Les figures du dessin annexé feront bien comprendre comment l'invention peut être réalisée.

La figure 1 est une vue en coupe schématique d'un dispositif selon l'invention fixé sur un mur.

La figure 2 est une vue de face de la paroi extérieure du mur de la figure 1.

La figure 3 est une coupe schématique d'une variante de réalisation du dispositif selon l'invention.

La figure 4 montre une variante de réalisation du dispositif selon l'invention.

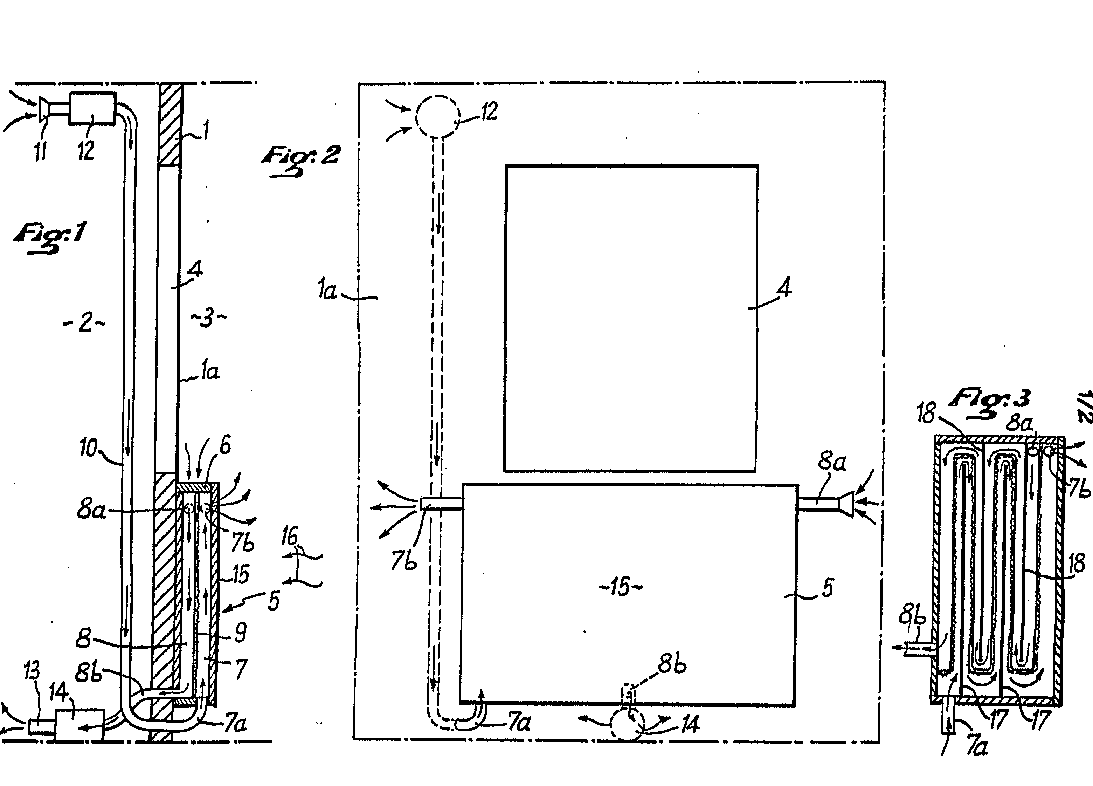

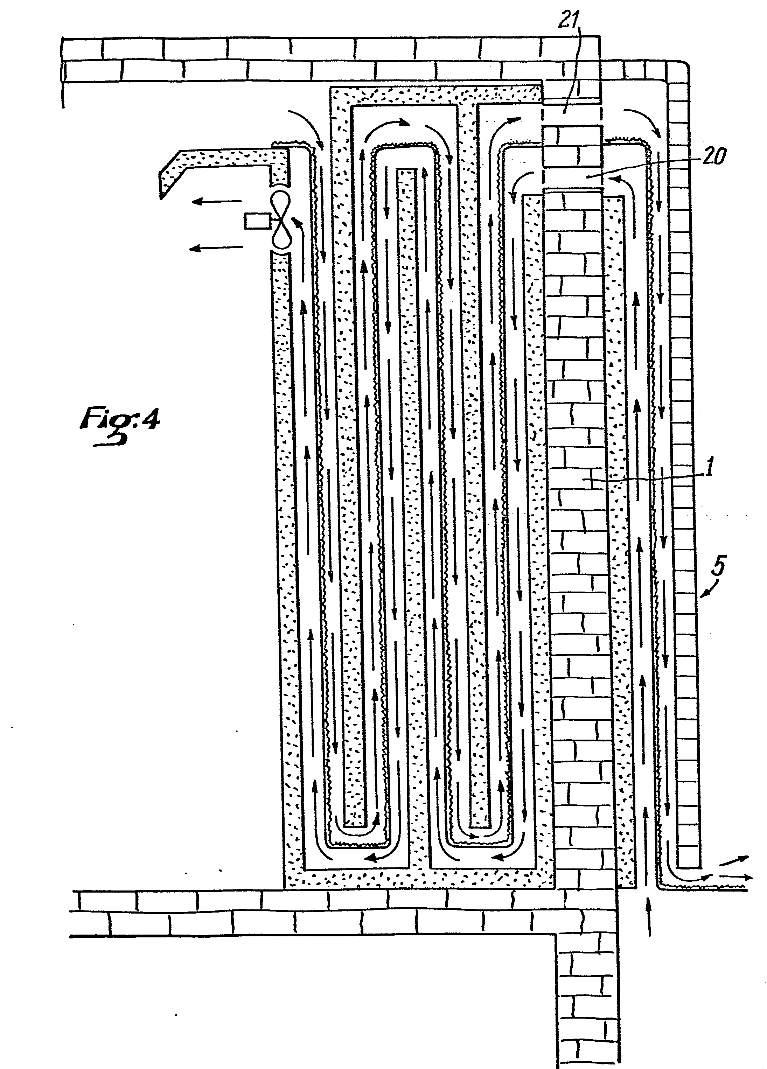

Sur les figures 1 et 2, on a représenté un mur 1 séparant un local intérieur 2 de l'extérieur 3. Ce mur peut être pourvu d'une ouverture de fenêtre 4. Sur la face extérieure 1a du mur 1 est fixé, en dessous de la fenêtre 4, un dispositif 5 conforme à l'invention.

Comme on peut le voir, ce dispositif 5 comporte une enceinte étanche 6, séparée en deux compartiments 7 et 8 par une feuille 9 d'une matière conductrice de la chaleur. Le compartiment 7 comporte une entrée **7a** pour l'air venant du local 2 et une sortie **7b** vers l'extérieur, pour cet air. Le compartiement 8 comporte une entrée **8a** pour l'air frais extérieur et une sortie **8b** vers le local 2. L'entrée **7a** peut être reliée par une conduite 10 à une entrée d'air 11 disposée au voisinage du plafond du local 2. Un ventilateur 12 peut être prévu pour forcer l'air aspiré dans la conduite 10 et le compartiement 7. De même, la sortie **8a** est reliée à une sortie d'air frais 13 disposée au voisinage du plancher du local 2. Un ventilateur 14 peut être prévu pour forcer la circulation de l'air frais dans le compartiement 8.

Vers l'extérieur, l'enceinte 6 est délimitée par une plaque transparente 15, par exemple une vitre ou une plaque d'un polycarbonate, servant également de paroi au compartiment 7. Ainsi, le dispositif 5 non seulement peut servir d'échangeur de chaleur entre les courants d'air chaud et frais circulant respectivement dans les compartiments 7 et 8, mais encore il agit comme un convertisseur photothermique susceptible de capter l'énergie des photons parvenant à la feuille métallique 9 (voir les flèches 16).

De préférence, l'entrée **7a** se trouve à la partie inférieure du dispositif, tandis que l'entrée **7b** se trouve à la partie supérieure de celui-ci. Inversement, l'entrée **8a** se trouve à la partie supérieure du dispositif 5, tandis que la sortie **8b** se trouve à la partie inférieure. Ainsi, les courants d'air, figurés par les différentes flèches, circulent à contre-courant dans le dispositif 5.

De façon connue, par exemple par la demande de brevet français rappelée ci-dessus, la feuille thermoconductrice 9 comporte une face lisse du côté du compartiment 8 traversé par l'air frais venant de l'extérieur et une face pourvue d'une multitude de dentrites du côté du compartiment 7 traversé par l'air chaud sortant du local.

La face lisse sert à isoler la chambre 8. La face rugueuse favorise le passage thermique de la chambre 7 à la chambre 8.

Pour favoriser les échanges thermiques et utiliser la totalité de la surface de la feuille 9, on peut prévoir des chicanes (non représentées) pour répartir les deux courants d'air sur la totalité de la surface de la feuille 9, et provoquer des turbulences qui optimisent les échanges thermiques.

Par ailleurs, comme le montre la figure 3, la feuille 9 peut former une pluralité de méandres, qui, associés à des parois fixes 17 et 18 forment des chicanes augmentant la surface d'échange entre les deux courants d'air.

En variante, il est possible d'associer au dispositif extérieur un autre dispositif analogue à l'intérieur du local. De cette façon, une grande partie de l'échange thermique entre l'air sortant et l'air qui entre s'effectue à l'intérieur du local. Le dispositif extérieur sert principalement à apporter à l'air qui entre un surplus de calories qui compense les pertes par rendement de l'échange thermique. Ainsi, non seulement on ne perd aucune calorie, mais encore on introduit des calories supplémentaires dans l'air qui entre.

Un système de ce type est illustré par la figure 5. Il comporte un dispositif 5 du type de celui des figures 1 et 2 monté à l'extérieur du mur 1 et un dispositif du type de celui de la figure 3 monté à l'intérieur du local. Les deux dispositifs sont montés en série, aussi bien en ce qui concerne le courant d'air entrant que le courant d'air sortant par l'intermédiaire de trous 20 et 21 traversant le mur 1.

Afin notamment d'éviter des dépôts de vapeur d'eau et/ou de poussière dans le ou les dispositifs selon l'invention, on peut prévoir des filtres et/ou des déshumidificateurs à certaines entrées d'air. Inversement, on pourrait prévoir des humidificateurs en cas de besoin.

Par ailleurs, au moins l'un des dispositifs selon l'invention pourrait être monté sur le plafond du local.

## REVENDICATIONS

1.Dispositif pour renouveler l'air d'un local, caractérisé en ce qu'il comporte une enceinte étanche 6 séparée en deux compartiments plats 7 et 8 par une feuille 9 d'une matière conductrice de la chaleur, l'un des compartiments 7 comportant une entrée 7a pour l'air venant du local 2 et une sortie 7b à l'extérieur pour cet air, tandis que l'autre compartiment 8 comporte une entrée d'air frais extérieur 8a et une sortie 8b de celui-ci à l'intérieur dudit local 2.

2. Dispositif selon la revendication 1, caractérisé en ce que l'air venant du local 2 et l'air frais venant de l'extérieur 3 circulent en sens inverse de part et d'autre de ladite feuille 9 de matière conductrice de la chaleur.

3. Dispositif selon l'une quelconque des revendications 1 et 2, caractérisé en ce qu'il forme un convertisseur photothermique et en ce que le compartiment 7 traversé par l'air sortant du local 2 est dirigé vers la lumière incidente 16.

4. Dispositif selon l'une quelconque des revendications 1 à 3, caractérisé en ce que la feuille de matière conductrice 9 comporte une face lisse du côté du compartiment 8 traversé par l'air frais et une face soit ayant subi un traitement absorbant, soit pourvue d'une multitude de dendrites du côté du compartiment 7 traversé par l'air sortant du local 2.

5. Dispositif selon l'une quelconque des revendications 1 à 4, caractérisé en ce qu'au moins l'un des compartiments est pourvu de chicanes pour répartir l'air qui le traverse sur la totalité de la surface de ladite feuille 9 de matière conductrice de la chaleur.

6. Dispositif selon l'une quelconque des revendications 1 à 5, caractérisé en ce que la feuille 9 de matière conductrice de la chaleur forme des méandres qui, associés à des chicanes 17,18, augmentent la surface d'échange entre l'air frais venant de l'extérieur et l'air sortant du local.

7. Dispositif selon l'une quelconque des revendications 1 à 6, caractérisé en ce qu'il comporte des moyens 12, 14, pour forcer l'air à travers l'un au moins des compartiments 7 ou 8.

8. Dispositif selon l'une quelconque des revendications 1 à 7, caractérisé en ce qu'il est fixé sur la face extérieure 1a d'un mur 1 du local 2.

9. Dispositif selon la revendication 8, caractérisé en ce qu'il comporte de plus un dispositif semblable placé à l'intérieur du local et monté en série avec le dispositif extérieur tant en ce qui concerne le courant qui sort que le courant qui entre.

10.- Dispositif selon la revendication 8, caractérisé en ce qu'il est fixé verticalement, horizontalement ou en oblique sur ledit mur 1.

11.- Dispositif selon la revendication 9, caractérisé en ce que ledit dispositif placé à l'intérieur du local est fixé au plafond.

Fig.1

Fig.2

Fig.3

1/2

0074298

0074298

21

20

1

5

*Fig. 4*

**0074298**

Numéro de la demande

| | Office européen des brevets | **RAPPORT DE RECHERCHE EUROPEENNE** | EP 82 40 1540.8 |

| **DOCUMENTS CONSIDERES COMME PERTINENTS** | | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| X,Y | EP - A2 - 0 029 573 (KLIX) <br> * page 5, ligne 28 à page 6, ligne 9; <br> page 7, lignes 20 à 33; fig. 13 * <br> -- | 1-3,6, <br> 7 | F 24 F 7/08 <br> F 24 J 3/02 |
| X,Y | DE - A1 - 2 930 990 (GRÜN et al.) <br> * page 5; page 4, paragraphe 4 * <br> -- | 1-3,5, <br> 8 | |
| X | DE - A1 - 2 929 875 (KLOOS) <br> * page 6, ligne 17 à page 7, ligne 25 * <br> -- | 1,5,7 | |
| Y | DE - A1 - 2 944 230 (KEMPF) <br> * page 2, paragraphe 4 * <br> -- | 3 | **DOMAINES TECHNIQUES RECHERCHES (Int. Cl. 3)** <br><br> F 24 F 7/00 <br> F 24 J 3/00 |
| A | FR - A1 - 2 438 241 (CIE GENERALE D'ELEC-TRICITE) <br> * page 1, ligne 33 à page 2, ligne 14 * <br> -- | 3 | |
| A | DE - A1 - 2 819 750 (PEDONE) <br> * fig. 2, référence 1 * <br> & FR - A - 2 390 686 <br> ---- | 4 | |

| Le présent rapport de recherche a été établi pour toutes les revendications | | |

| Lieu de la recherche <br> Berlin | Date d'achèvement de la recherche <br> 25-11-1982 | Examinateur <br> PIEPER |

OEB Form 1503.1  06.78